# EUROPEAN PATENT SPECIFICATION

(11) **EP 4 103 659 B1**
(45) Date of publication and mention of the grant of the patent: **06.08.2025**
(21) Application number: 21704530.1
(22) Date of filing: 10.02.2021
(51) Int. Cl.: C09K 5/10, H01M 8/04029

(54) **HEAT-TRANSFER FLUID WITH LOW CONDUCTIVITY COMPRISING AN AMIDE INHIBITOR, METHODS FOR ITS PREPARATION AND USES THEREOF**
WÄRMEÜBERTRAGUNGSFLÜSSIGKEIT MIT GERINGER LEITFÄHIGKEIT MIT EINEM AMIDINHIBITOR, VERFAHREN ZU IHRER HERSTELLUNG UND IHRE VERWENDUNG
FLUIDE DE TRANSFERT DE CHALEUR À FAIBLE CONDUCTIVITÉ COMPRENANT UN INHIBITEUR D'AMIDE, SES PROCÉDÉS DE PRÉPARATION ET D'UTILISATION

(30) Priority: 11.02.2020 EP 20156627
(43) Date of publication of application: 21.12.2022
(73) Proprietor: ARTECO N.V., 2900 Schoten (BE)
(72) Inventor: CLERICK, Sander, 9051 Gent (BE); LIEVENS, Serge, 9051 Gent (BE)
(74) Representative: Nederlandsch Octrooibureau
(86) International application number: PCT/EP2021/053215
(87) International publication number: WO 2021/160674

(56) References cited:
- US-A1- 2003 164 470
- US-A1- 2005 109 979

## Description

### Field of the invention

The present invention relates to heat-transfer fluids with low conductivity which comprise an amide inhibitor and are useful for diverse applications, for example in fuel cells, as defined in the appended set of claims. The invention further relates to methods for the preparation of said heat-transfer fluids, and to the methods and uses employing said heat-transfer fluids, as defined in the appended set of claims.

### Background art

Heat-transfer fluids are widely employed in heat exchange systems associated with internal combustion engines, solar systems, fuel cells, electrical motors, generators, electronic equipment and the like. Heat-transfer fluids are generally composed of a base fluid and one or more additives.

Historically, water has been the preferred base fluid with a view to heat-transfer properties. In many applications, antifreeze properties are needed and in such cases a base fluid consisting of water mixed with freezing point depressants like alcohols, glycols or salts is employed. The additives present in heat-transfer fluids may be employed to obtain a variety of functionalities, such as (further) lowering of the freezing point, improving the heat-exchange properties, inhibiting corrosion etc. Since heat-transfer fluids are in continuous contact with metal parts (aluminum alloys, cast iron, steel, copper, brass, solder etc.) they nearly always contain one or more corrosion inhibitors.

Fuel cells are electrochemical cells in which the chemical energy stored in a fuel source is converted to electrical energy by controlled oxidation of the fuel. The relatively low output of pollutants compared to combustion engines makes fuel cells attractive alternatives in applications such as automobiles and power plants. In most applications, several electrochemical cells are stacked together in series into a so-called fuel cell stack, allowing higher voltages to be generated. Heat generated by the fuel cell stack can be removed by flowing coolant through channels in the separator plates between the cells.

The potential difference between the positive and negative ends of the fuel cell stack may cause a shunt current to flow through the coolant, thus reducing the voltage of the fuel cell. In addition to the deleterious loss of voltage, shunt currents cause additional problems, such as corrosion of the separator plate near the positive end of a fuel cell stack. Hence, coolants for use in electrical applications such as fuel cells need to have low electrical conductivity (i.e. high electrical resistance) and be capable of maintaining this through the lifetime of the coolant.

Most known heat-transfer fluids (e.g. coolants) have been specifically designed for internal combustion engines and are not suitable for use in electrical applications, such as fuel cells, because they (i) possess high electrical conductivity, or (ii) become significantly more electrically conductive upon aging, especially at increased temperatures. The increase in conductivity upon aging is generally attributed to the formation of ionic compounds due to degradation of glycols, which are often used as a base fluid, due to degradation of additives, and/or due to metal corrosion.

Hence, in recent years there has been an increased interest in developing heat-transfer fluids which are suitable for use in electrical applications, such as fuel cells.

US2005/0109979 describes a heat-transfer fluid for electric vehicles comprising a base agent and an anti-corrosive additive which is a phenolic compound and suppresses oxidation of the base agent or blocks ions from eluting into the cooling system, preventing increases in the conductivity of the coolant.

US2003/164470 describes antifreeze concentrates comprising carboxamides or sulfonamides for magnesium-containing and/or aluminium-containing internal combustion engines. The antrifreeze concentrates are based on alkylene glycols, glycerols or their derivatives.

US2006/027782 describes that increases in electrical conductivity in a cooling system based on 1,3-propanediol can be substantially slowed down by adding small amounts of azole derivatives.

The known heat-transfer fluids which are capable of maintaining low conductivity have several disadvantages, for example they rely on the presence of specific additives which may be expensive, toxic or have other undesirable properties. Furthermore, since the additives employed in the art to maintain low conductivity are often consumed in the process, large amounts of additive are required for practical use, which may also affect other properties of the heat-transfer fluid in an undesirable way.

Glycol based heat transfer fluids have several advantages. For example, they possess a low freezing point combined with a low viscosity and high flash point, and the safety profile of different glycols has been extensively studied.

Further, the present inventors have found that it would be particularly desirable to provide a glycol based heat transfer fluid capable of maintaining low conductivity upon ageing in the presence of aluminium. In view of their light weight, aluminium based materials are often preferred for parts such as cooling plates and heat exchangers.

It is an object of the present invention to provide improved heat-transfer fluids, preferably glycol based, which are suitable for use as a coolant in electrical systems, such as fuel cells or power electronics.

Hence, it is an object of the present invention to provide heat-transfer fluids, preferably glycol based, which have low conductivity and which are preferably capable of maintaining low conductivity upon aging, such as upon ageing at increased temperatures.

It is a further object of the present invention to provide heat-transfer fluids, preferably glycol based, which are capable of maintaining comparable low conductivity upon aging, such as upon aging at increased temperatures while requiring less additives than known heat-transfer fluids.

It is a further object of the present invention to provide heat-transfer fluids, glycol based, possessing extended service life compared to known heat-transfer fluids.

### Summary of the invention

The present inventors have surprisingly found that one or more of these objectives can be met by employing a composition comprising a base fluid and at least one aliphatic carboxamide, and wherein the composition preferably has a conductivity at 25 °C of less than 25 µS/cm.

As will be shown in the appended examples, it was surprisingly found that aliphatic carboxamides significantly outperform aromatic carboxamides with regard to maintaining low conductivity upon aging at increased temperatures. Furthermore, it was surprisingly found that the compositions in accordance with the invention are capable of maintaining this low electrical conductivity upon aging at increased temperatures in the presence of aluminum substrates.

It will be understood by the skilled person based on the present disclosure that the compositions in accordance with the present invention effectively allow the provision of heat-transfer fluids or coolants suitable for use in electrical applications which require less additives (especially antioxidants), which can be formulated free of aromatic compounds and/or which are capable of maintaining low electrical conductivity upon aging for longer periods of time than comparable compositions known in the art.

US2005/0109979A1 relates to a coolant composition for cooling a fuel cell and discloses in example 4 a composition comprising ethylene glycol, water and anthranilamide (an aromatic carboxamide). Nothing in US2005/0109979A1 points in the direction of aliphatic carboxamides for further improved conductivity upon aging.

The invention is set out in the appended set of claims.

In preferred embodiments the compositions of the invention are provided in the form of ready-to-use compositions.

In preferred embodiments the compositions of the invention are provided in the form of concentrates for preparing the ready-to-use compositions described herein.

In another aspect the invention provides a method for preparing the compositions described herein.

According to an aspect of the present disclosure, not part of the invention provides a method for preparing the ready-to-use compositions described herein from a concentrate.

In another aspect the present disclosure, not part of the invention provides corresponding uses of an aliphatic carboxamide.

In another aspect the invention provides corresponding uses of the ready-to-use compositions described herein.

### Description of embodiments

A first aspect the invention concerns compositions comprising a base fluid and at least one aliphatic carboxamide having a molecular weight of less than 500 g/mol, wherein the composition has a conductivity at 25 °C of less than 25 µS/cm, preferably less than 10 µS/cm, more preferably less than 5 µS/cm; wherein the composition has a conductivity at 25 °C of less than 25 µS/cm; wherein the base fluid consists of water and an alcohol selected from the group consisting of monoethylene glycol, diethylene glycol, triethylene glycol, tetraethylene glycol, pentaethylene glycol, hexaethylene glycol, monopropylene glycol, 1,3 propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof; wherein the alcohol is present in an amount in the range of 10-99 wt.% (by weight of the base fluid), preferably 30-70 wt.%, wherein the aliphatic carboxamide is not adipamide and/or N-methyl 2-pyrrolidone.

### Base fluid

In accordance with the invention the base fluid consists of water, monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, glycerol or mixtures thereof.

As used herein, "monoethylene glycol" should be interpreted to mean "ethane-1,2-diol", and is interchangeably referred to as "MEG".

As used herein, "monopropylene glycol" should be interpreted to mean "propane-1,2-diol", and is interchangeably referred to as "MPG".

As used herein, the term "glycerol" means "propane-1,2,3-triol" and is synonymous with glycerin.

In preferred embodiments of the invention the base fluid consists of water, monoethylene glycol, monopropylene glycol, 1,3-propanediol, glycerol or mixtures thereof.

In highly preferred embodiments of the invention the base fluid consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof. Preferably, the alcohol is present in an amount in the range of 10-99 wt.% (by weight of the base fluid), preferably 10-80 wt.%, more preferably 30-70 wt.%. In particular embodiments the alcohol is present in an amount in the range of 10-45 wt.% (by weight of the base fluid).

In embodiments of the invention a composition as described herein is provided, wherein the composition comprises more than 5 wt.% (by total weight of the composition) of base fluid, such as more than 6 wt.%, more than 7 wt.%, more than 8 wt.%, more than 9 wt.%, more than 10 wt.%, more than 11 wt.%, more than 12 wt.%, more than 13 wt.%, more than 14 wt.%, more than 15 wt.%, more than 16 wt.%, more than 17 wt.%, more than 18 wt.%, more than 19 wt.%, more than 20 wt.%, more than 25 wt.%, more than 30 wt.%, more than 35 wt.%, more than 40 wt.%, more than 45 wt.%, more than 50 wt.%, more than 55 wt.%, more than 60 wt.%, more than 65 wt.% or more than 70 wt.% of base fluid.

In preferred embodiments of the invention a composition as described herein is provided, wherein the composition comprises more than 10 wt.% (by total weight of the composition) of base fluid, preferably more than 20 wt.%, preferably more than 50 wt.%.

As will be understood by the person skilled in the art, the base fluid is normally added *'quantum satis'* and its amount is thus not particularly limited. In embodiments of the invention, the composition comprises less than 99.9 wt.% (by total weight of the composition) base fluid, such as less than 99.8 wt.%, less than 99.5 wt.% or less than 99 wt.%, such as less than 98 wt.%, less than 97 wt.%, less than 96 wt.%, less than 95 wt.%, less than 94 wt.%, less than 93 wt.%, less than 92 wt.%, less than 91 wt.%, less than 90 wt.%, less than 89 wt.%, less than 88 wt.%, less than 87 wt.%, less than 86 wt.%, less than 85 wt.%, less than 84 wt.%, less than 83 wt.%, less than 82 wt.%, less than 81 wt.%, less than 80 wt.%, less than 75 wt.%, less than 70 wt.%, less than 65 wt.%, less than 60 wt.% or less than 55 wt.% of base fluid.

In embodiments of the invention the base fluid comprises more than 50 wt.% (by weight of the base fluid) water, preferably more than 70 wt.%, preferably more than 85 wt.%, preferably more than 95 wt.% water. In embodiments of the invention the base fluid consists of water.

In embodiments of the invention the base fluid comprises more than 50 wt.% (by weight of the base fluid) monoethylene glycol, preferably more than 70 wt.%, preferably more than 85 wt.%, preferably more than 95 wt.% monoethylene glycol. In embodiments of the invention the base fluid consists of monoethylene glycol.

In embodiments of the invention the base fluid comprises more than 50 wt.% (by weight of the base fluid) monopropylene glycol, preferably more than 70 wt.%, preferably more than 85 wt.%, preferably more than 95 wt.% monopropylene glycol. In embodiments of the invention the base fluid consists of monopropylene glycol.

In embodiments of the invention the base fluid comprises more than 50 wt.% (by weight of the base fluid) 1,3-propanediol, preferably more than 70 wt.%, preferably more than 85 wt.%, preferably more than 95 wt.% 1,3-propanediol. In embodiments of the invention the base fluid consists of 1,3-propanediol.

In embodiments of the invention the base fluid comprises more than 50 wt.% (by weight of the base fluid) glycerol, preferably more than 70 wt.%, preferably more than 85 wt.%, preferably more than 95 wt.% glycerol. In embodiments of the invention the base fluid consists of glycerol.

In embodiments of the invention, the composition provided herein is free of monoethylene glycol, monopropylene glycol, 1,3-propanediol, and glycerol. In embodiments of the invention, the composition provided herein is free of aliphatic polyols.

### Aliphatic carboxamide

As used herein, the term 'aliphatic carboxamide' should be interpreted to mean any molecule comprising at least one carboxamide functional group, wherein the carboxamide may be a primary (R(CO)NH₂), secondary (R(CO)NHR') or tertiary (R(CO)NR'R") carboxamide (R, R' and R" not designating H) and wherein the molecule does not comprise an aromatic moiety. The aliphatic carboxamide may be linear, branched or cyclic. The aliphatic carboxamide may be saturated or unsaturated. The aliphatic carboxamide is not adipamide and/or N-methyl 2-pyrrolidone.

According to the invention, the aliphatic carboxamide has a molecular weight of less than 500 g/mol, preferably less than 250 g/mol.

In embodiments of the invention, the aliphatic carboxamide comprises 2 to 10 carbon atoms, more preferably the aliphatic carboxamide comprises 4 to 6 carbon atoms.

In embodiments of the invention, the aliphatic carboxamide comprises one or two carboxamide groups. As used herein, the expression "the aliphatic carboxamide comprises one or two carboxamide groups" means that the aliphatic carboxamide has exactly one or two carboxamide groups. The carboxamide groups are preferably primary or secondary carboxamide groups.

In preferred embodiments of the invention, the aliphatic carboxamide comprises 2 to 16 carbon atoms, preferably the aliphatic carboxamide comprises 2 to 10 carbon atoms, more preferably the aliphatic carboxamide comprises 4 to 6 carbon atoms; and the aliphatic carboxamide comprises one or two carboxamide groups.

In highly preferred embodiments of the invention, the aliphatic carboxamide comprises 2 to 16 carbon atoms, preferably the aliphatic carboxamide comprises 2 to 10 carbon atoms, more preferably the aliphatic carboxamide comprises 4 to 6 carbon atoms; the aliphatic carboxamide comprises one or two carboxamide groups and the carboxamide groups are primary or secondary carboxamide groups.

In preferred embodiments of the invention, the aliphatic carboxamide does not comprise any heteroatoms aside from the heteroatoms comprised in the carboxamide groups. Hence, in preferred embodiments the aliphatic carboxamide does not comprise any functional groups other than the at least one carboxamide group.

In preferred embodiments of the invention, the aliphatic carboxamide comprises 2 to 16 carbon atoms, preferably the aliphatic carboxamide comprises 2 to 10 carbon atoms, more preferably the aliphatic carboxamide comprises 4 to 6 carbon atoms; the aliphatic carboxamide comprises one or two carboxamide groups; and the aliphatic carboxamide does not comprise any heteroatoms aside from the heteroatoms comprised in the carboxamide groups.

In more preferred embodiments of the invention, the aliphatic carboxamide comprises 2 to 16 carbon atoms, preferably the aliphatic carboxamide comprises 2 to 10 carbon atoms, more preferably the aliphatic carboxamide comprises 4 to 6 carbon atoms; the aliphatic carboxamide comprises one or two carboxamide groups; the carboxamide groups are primary or secondary carboxamide groups; and the aliphatic carboxamide does not comprise any heteroatoms aside from the heteroatoms comprised in the carboxamide groups.

In embodiments of the invention, the aliphatic carboxamide according to various embodiments described herein is a compound of formula (I) 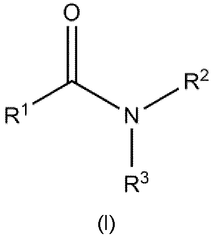
wherein R¹, R² and R³ independently represent an unsubstituted C₁ - C₁₀ straight chain, branched or cyclic alkyl, an unsubstituted C₂ - C₁₀ straight chain, branched or cyclic alkenyl or an unsubstituted C₂ - C₁₀ straight chain or branched alkynyl;
preferably R¹, R² and R³ individually represent a C₁ - C₁₀ straight chain, branched or cyclic alkyl, a C₂ - C₁₀ straight chain, branched or cyclic alkenyl or a C₂ - C₁₀ straight chain or branched alkynyl and one or both of R² and R³ represents H or methyl;
more preferably R¹ represents a C₁ - C₁₀ straight chain, branched or cyclic alkyl and one or both of R² and R³ represents H or methyl;
most preferably R¹ represents a C₁ - C₁₀ straight chain, branched or cyclic alkyl and both of R² and R³ represent H.

In embodiments of the invention, the aliphatic carboxamide according to various embodiments described herein is a compound of formula (I) 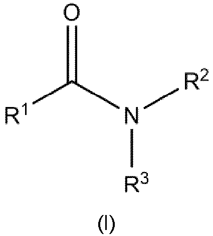
wherein R¹, R² and R³ independently represent H, an unsubstituted C₁ - C₁₀ straight chain,
branched or cyclic alkyl, an unsubstituted C₂ - C₁₀ straight chain, branched or cyclic alkenyl or an unsubstituted C₂ - C₁₀ straight chain or branched alkynyl;
preferably R¹, R² and R³ individually represent a C₁ - C₁₀ straight chain, branched or cyclic alkyl, a C₂ - C₁₀ straight chain, branched or cyclic alkenyl or a C₂ - C₁₀ straight chain or branched alkynyl and one or both of R² and R³ represents H or methyl;
more preferably R¹ represents a C₁ - C₁₀ straight chain, branched or cyclic alkyl and one or both of R² and R³ represents H or methyl;
most preferably R¹ represents a C₁ - C₁₀ straight chain, branched or cyclic alkyl and both of R² and R³ represent H.

In embodiments of the invention, the aliphatic carboxamide according to various embodiments described herein is a compound of formula (II) 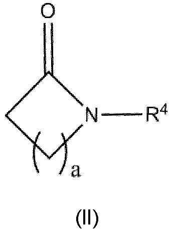
wherein a is an integer selected from 1-8 and R⁴ represents H, an unsubstituted C₁ - C₁₀ straight chain, branched or cyclic alkyl, an unsubstituted C₂ - C₁₀ straight chain, branched or cyclic alkenyl or an unsubstituted C₂ - C₁₀ straight chain or branched alkynyl;
preferably a is an integer selected from 1-5 and R⁴ represents H or methyl;
most preferably a is an integer selected from 1-5 and R⁴ represents H.

In embodiments of the invention, the aliphatic carboxamide according to various embodiments described herein is a compound of formula (III) 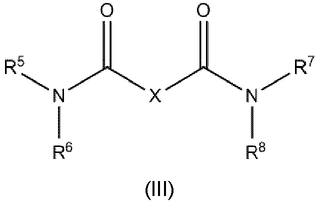
wherein X represents an unsubstituted C₁ - C₁₀ straight chain, branched or cyclic alkanediyl, an unsubstituted C₂ - C₁₀ straight chain, branched or cyclic alkenediyl or an unsubstituted C₂ - C₁₀ straight chain or branched alkynediyl and R⁵, R⁶, R⁷ and R⁸ independently represent H or methyl; preferably X represents an unsubstituted C₁ - C₁₀ straight chain, branched or cyclic alkanediyl, and R⁵, R⁶, R⁷ and R⁸ independently represent H or methyl;
more preferably X represents an unsubstituted C₁ - C₁₀ straight chain, branched or cyclic alkanediyl, and R⁵, R⁶, R⁷ and R⁸ represent H.

In embodiments of the invention, the aliphatic carboxamide is one of the following compounds (I)a-(I)j, (II)a-(Ild) or (III)a-(III)j:

| | Compound |
|---|---|
| 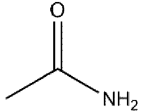 | (I)a |
| 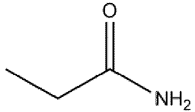 | (I)b |
| 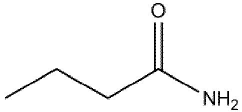 | (I)c |
| 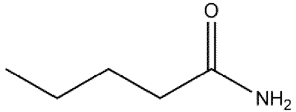 | (I)d |
| 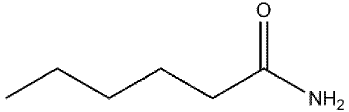 | (I)e |
| 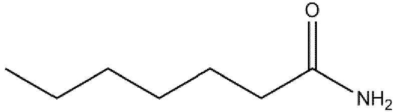 | (I)f |
| 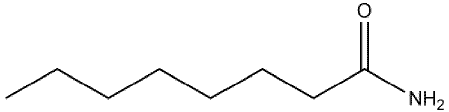 | (I)g |
| 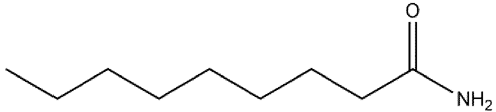 | (I)h |
| 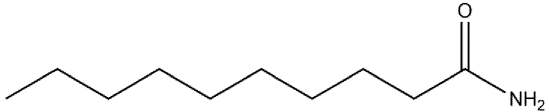 | (I)i |
| 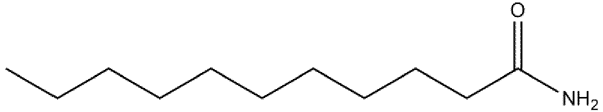 | (I)j |

| | Compound |
|---|---|
| 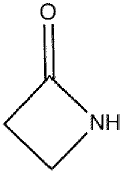 | (II)a |
| 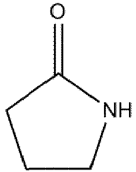 | (II)b |
| 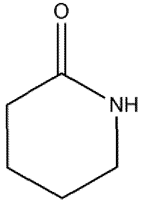 | (II)c |
| 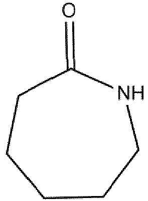 | (II)d |

| | Compound |
|---|---|
| 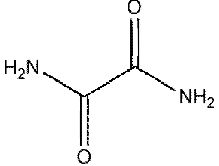 | (III)a |
| 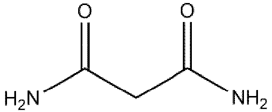 | (III)b |
| 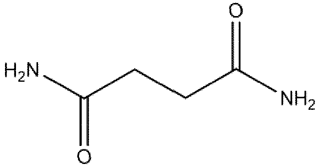 | (III)c |
| 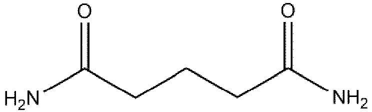 | (III)d |
| 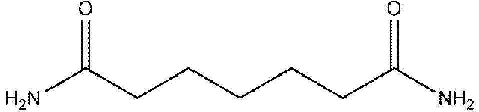 | (III)f |
| 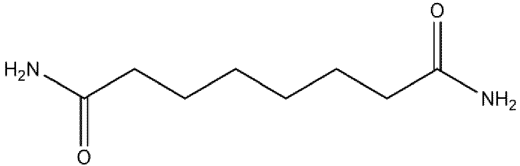 | (III)g |
| 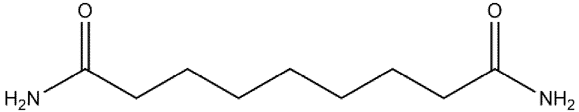 | (III)h |
| 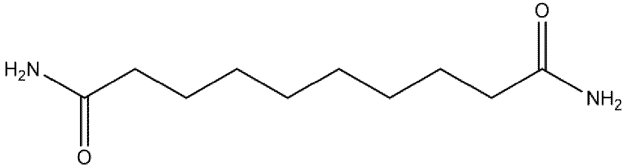 | (III)i |
| 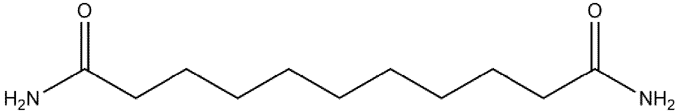 | (III)j |

In particular embodiments of the invention, the aliphatic carboxamide is not oxalic acid diamide, succinic acid amide, acetamide, 2-pyrrolidone and/or caprolactam, preferably oxalic acid diamide, succinic acid amide, succinic acid diamide, acetamide, 2-pyrrolidone and/or caprolactam.

In particular embodiments of the invention, the aliphatic carboxamide is not succinamide, adipamide, propionamide, hexanamide, 2-pyrrolidone, N-methyl-2-pyrrolidone, 2-piperidone and/or ε-caprolactam.

In particular preferred embodiments of the invention, the aliphatic carboxamide is not adipamide and/or N-methyl-2-pyrrolidone.

In particular preferred embodiments of the invention, the aliphatic carboxamide is not oxalic acid diamide, succinic acid amide, acetamide, 2-pyrrolidone, caprolactam, adipamide, propionamide, hexanamide, N-methyl-2-pyrrolidone and/or 2-piperidone.

In embodiments of the invention, the aliphatic carboxamide is a compound of formula (I) as described herein wherein the aliphatic carboxamide is not acetamide, propionamide and/or hexanamide. In preferred embodiments of the invention, the aliphatic carboxamide is a compound of formula (I) as described herein wherein the aliphatic carboxamide is not acetamide.

In embodiments of the invention, the aliphatic carboxamide is a compound of formula (II) as described herein wherein the aliphatic carboxamide is not 2-pyrrolidone, N-methyl-2-pyrrolidone, 2-piperidone and/or caprolactam. In preferred embodiments of the invention, the aliphatic carboxamide is a compound of formula (II) as described herein wherein the aliphatic carboxamide is not 2-pyrrolidone, caprolactam and/or N-methyl-2-pyrrolidone. In more preferred embodiments of the invention, the aliphatic carboxamide is a compound of formula (II) as described herein wherein the aliphatic carboxamide is not N-methyl-2-pyrrolidone.

In embodiments of the invention, the aliphatic carboxamide is a compound of formula (III) as described herein wherein the aliphatic carboxamide is not oxalic acid diamide,succinic acid amide and/or adipamide. In preferred embodiments of the invention, the aliphatic carboxamide is a compound of formula (III) as described herein wherein the aliphatic carboxamide is not adipamide.

In embodiments of the invention, the aliphatic carboxamide is a compound selected from the group consisting of (I)b, (I)c, (I)d, (I)e, (I)f, (I)g, (I)h, (I)i, (I)j, (II)a, (II)c, (III)b, (III)d, (III)f, (III)g, (III)h, (III)i, and (III)j.

In embodiments of the invention, the aliphatic carboxamide is a compound selected from the group consisting of (I)b-(I)j, preferably (I)b-(I)g, more preferably (I)b-(I)e.

In embodiments of the invention, the aliphatic carboxamide is a compound selected from the group consisting of (I)b-(I)j, preferably (I)b-(I)g, more preferably (I)b-(I)d.

In embodiments of the invention, the aliphatic carboxamide is a compound selected from the group consisting of (II)a, (II)c, preferably (II)c.

In embodiments of the invention, the aliphatic carboxamide is a compound selected from the group consisting of (III)d-(III)j.

In embodiments of the invention, the aliphatic carboxamide is a compound selected from the group consisting of (III)d-(III)j.

In preferred embodiments of the invention, the aliphatic carboxamide is compound I(c) or (II)c, preferably I(c).

In embodiments of the invention, the aliphatic carboxamide is able to maintain the conductivity at 25 °C at less than 25 µS/cm, preferably less than 10 µS/cm, more preferably less than 5 µS/cm when employed as the sole additive at a concentration of 2.25 mmol aliphatic carboxamide per 100g MEG in a base fluid consisting of 33vol% MEG in water, wherein the conductivity is determined after aging the heat-transfer fluid at 90°C for 14 days.

### Conductivity

In embodiments of the invention, a composition as described herein is provided which has the conductivity described herein elsewhere, as measured in accordance with ASTM D1125 with a Radiometer Copenhagen CDM210 conductivity meter using a Radiometer Copenhagen CDC745-9 Conductivity cell and a Radiometer Copenhagen Temperature sensor T201.

In embodiments of the invention, a composition as described herein is provided which has a conductivity at 25°C after aging for 14 days at 90 °C, optionally in the presence of aluminium (EN AC-AlSi10Mg(a)T6, DIN EN 1706), of less than 25 µS/cm, preferably less than 10 µS/cm, preferably less than 5 µS/cm, more preferably less than 2 µS/cm.

Without wishing to be bound by any theory, the present inventors believe that the conductivity of the aged samples can be correlated to the amount of glycol oxidation products glycolate and formate present in the mixture, as can be seen from the experimental results. Hence, in embodiments of the invention, a composition as described herein is provided wherein, after aging for 14 days at 90 °C, optionally in the presence of aluminium, the concentration of glycolate and/or the concentration of formate is less than 30 ppm, preferably less than 10 ppm, wherein the concentration of glycolate and the concentration of formate is determined by ion-chromatography.

### Corrosion inhibition

As explained throughout this document, the compositions in accordance with the invention exhibit the conductivity characteristics described herein while not significantly corroding aluminium. Hence, in embodiments of the invention, a composition as described herein is provided wherein an aluminium coupon (EN AC-AlSi10Mg(a)T6, DIN EN 1706) submerged in the composition exhibits a weight loss of less than 20 mg, preferably less than 10 mg, preferably less than 2 mg when tested in accordance with MTV 5061 (heated).

### Further Additives

As will be understood by the skilled person, based on teachings presented herein, the compositions in accordance with the invention may comprise one or more additives, as is conventional in the art. It is within the routine capabilities of one of ordinary skill in the art to determine how much of a certain additive can be added such that the conductivity of the resulting composition is in accordance with the invention.

In certain embodiments of the invention the composition provided herein further comprises one or more additives, preferably an additive selected from the group consisting of corrosion inhibitors, liquid dielectrics, antioxidants, anti-wear agents, detergents and antifoam agents. In preferred embodiments the composition of the invention further comprises one or more of said additives in an amount within the range of 0.001-10 wt.% (by total weight of the composition), preferably 0.01-5 wt.%.

In preferred embodiments the composition of the invention further comprises one or more additives selected from the group consisting of thiazoles, triazoles, polyolefins, polyalkylene oxides, silicon oils, mineral oils, silicates, aliphatic monocarboxylic acids, aliphatic dicarboxylic acids, aliphatic tricarboxylic acids, molybdates, nitrates, nitrites, phosphonates and phosphates. In preferred embodiments the composition of the invention further comprises one or more of said additives in an amount within the range of 0.001-10 wt.% (by total weight of the composition), preferably 0.01-5 wt.%.

The further additives which are aliphatic monocarboxylic acids, aliphatic dicarboxylic acids, aliphatic tricarboxylic acids and corresponding carboxylates referred to herein in various embodiments concern unsubstituted aliphatic carboxylic acids or carboxylates.

In preferred embodiments of the invention, a composition as defined herein is provided, wherein the composition further comprises a corrosion inhibitor which is a thiazole or a triazole, preferably an aromatic triazole or thiazole. In preferred embodiments of the invention, a composition as defined herein is provided, wherein the composition further comprises one or more triazoles selected from the group consisting of tolyltriazole, benzotriazole or combinations thereof.

In embodiments of the invention, a composition as defined herein is provided, wherein the composition further comprises a triazole or a thiazole, preferably tolyltriazole or benzotriazole in an amount of more than 0.001 wt.% (by total weight of the composition), preferably more than 0.01 wt.%, preferably more than 0.1 wt.% and/or less than 10 wt.%, preferably less than 5 wt.%, preferably less than 3 wt.%.

In embodiments of the invention, a composition as defined herein is provided, wherein the composition further comprises a defoaming agent. Preferably, the defoaming agent is selected from the group consisting of a polyolefin, a polyalkylene oxide, a silicon polymer (such as a 3D silicon polymer) or a silicon oil.

In embodiments of the invention, a composition as defined herein is provided, wherein the composition further comprises the defoaming agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a corrosion inhibitors selected from the group consisting of aromatic carboxylates, aliphatic monocarboxylates, aliphatic dicarboxylates, aliphatic tricarboxylates, molybdates, and phosphates.

In embodiments of the invention, a composition as defined herein is provided, wherein the composition further comprises an aliphatic monocarboxylate, preferably an aliphatic monocarboxylate selected from the group consisting of C₄-C₁₂ aliphatic monocarboxylates in an amount of more than 50 ppm (by weight), preferably more than 100 ppm, preferably more than 500 ppm and/or less than 5000 ppm, preferably less than 2500 ppm, preferably less than 1000 ppm.

In embodiments of the invention, a composition as defined herein is provided, wherein the composition further comprises an aliphatic dicarboxylate, preferably an aliphatic dicarboxylate selected from the group consisting of C₆-C₁₆ aliphatic dicarboxylates, in an amount of more than 50 ppm (by weight), preferably more than 100 ppm, preferably more than 500 ppm and/or less than 5000 ppm, preferably less than 2500 ppm, preferably less than 1000 ppm.

In embodiments of the invention, a composition as defined herein is provided, wherein the composition further comprises an aliphatic tricarboxylate, preferably an aliphatic tricarboxylate selected from the group consisting of C₇-C₁₈ aliphatic tricarboxylates, in an amount of more than 50 ppm (by weight), preferably more than 100 ppm, preferably more than 500 ppm and/or less than 5000 ppm, preferably less than 2500 ppm, preferably less than 1000 ppm.

In embodiments of the invention, a composition as defined herein is provided, wherein the composition further comprises an aromatic carboxylate, preferably an aromatic carboxylate selected from the group consisting of benzoate, benzene-1,2-dicarboxylate, benzene-1,2,3-tricarboxylate, benzene-1,2,4-tricarboxylate, benzene-1,4-dicarboxylate and combinations thereof, in an amount of more than 50 ppm (by weight), preferably more than 100 ppm, preferably more than 500 ppm and/or less than 5000 ppm, preferably less than 2500 ppm, preferably less than 1000 ppm.

In embodiments of the invention, a composition as defined herein is provided, wherein the composition further comprises a corrosion inhibitor which is a molybdate, preferably an inorganic molybdate in an amount of more than 1 ppm (by weight) molybdate, preferably more than 10 ppm, preferably more than 100 ppm molybdate and/or less than 10000 ppm, preferably less than 1000 ppm, preferably less than 500 ppm.

If the molybdate is employed in the form of a salt, the amount of molybdate as used in this document refers to the amount of molybdate anion (i.e. exclusive of the weight of the cationic counterion).

In embodiments of the invention, a composition as defined herein is provided, wherein the composition further comprises a corrosion inhibitor which is a phosphate, preferably an inorganic phosphate in an amount of more than 10 ppm (by weight) phosphate, preferably more than 250 ppm, preferably more than 1000 ppm phosphate and/or less than 10000 ppm, preferably less than 5000 ppm, preferably less than 2500 ppm.

If the phosphate is employed in the form of a salt, the amount of phosphate as used in this document refers to the amount of phosphate anion (i.e. exclusive of the weight of the cationic counterion).

In embodiments of the invention, a composition as defined herein is provided, wherein the composition further comprises a corrosion inhibitor which is a silicate in an amount more than 1 ppm Si (by weight), preferably more than 10 ppm Si, most preferably more than 100 ppm Si and/or less than 10000 ppm, preferably less than 1000 ppm, preferably less than 500 ppm. Said silicate corrosion inhibitor is preferably selected from the group consisting of inorganic silicates (such as sodium metasilicate), silicate esters (such as Si(OR)₄ wherein R is a C₁ to C₄ alkyl) or Silica (SiO₂) nanoparticles (such as silica nanoparticles having a volume median particle size (Dv50) within the range of 10-200 nm).

In embodiments of the invention, a composition as defined herein is provided, wherein the composition further comprises a nitrate, preferably an inorganic nitrate in an amount of more than 1 ppm (by total weight of the composition) nitrate, preferably more than 10 ppm, preferably more than 100 ppm nitrate and/or less than 10000 ppm, preferably less than 1000 ppm, preferably less than 500 ppm.

If the nitrate is employed in the form of a salt, the amount of nitrate as used in this document refers to the amount of nitrate anion (i.e. exclusive of the weight of the cationic counterion).

In embodiments of the invention, a composition as defined herein is provided, wherein the composition further comprises a nitrite, preferably an inorganic nitrite in an amount of more than 1 ppm (by total weight of the composition) nitrite, preferably more than 10 ppm, preferably more than 100 ppm nitrite and/or less than 10000 ppm, preferably less than 1000 ppm, preferably less than 500 ppm.

If the nitrite is employed in the form of a salt, the amount of nitrite as used in this document refers to the amount of nitrite anion (i.e exclusive of the weight of the cationic counterion).

In embodiments of the invention, a composition as defined herein is provided, wherein the composition further comprises a phosphonate, preferably an inorganic phosphonate in an amount of more than 10 ppm (by total weight of the composition) phosphonate, preferably more than 250 ppm, preferably more than 1000 ppm phosphonate and/or less than 10000 ppm, preferably less than 5000 ppm, preferably less than 2500 ppm.

If the phosphonate is employed in the form of a salt, the amount of phosphonate as used in this document refers to the amount of phosphonate anion (i.e. exclusive of the weight of the cationic counterion).

In embodiments of the invention, a composition as defined herein is provided, wherein the composition further comprises an antioxidant. Preferably, the antioxidant is selected from the group consisting of phenols, such as 2,6 di-t-butyl methylphenol and 4,4'-methylene-bis(2,6-di-t-butylphenol); aromatic amines, such as p,p-dioctylphenylamine, monooctyldiphenylamine, phenothiazine, 3,7-dioctylphenothiazine, phenyl-1-naphthylamine, phenyl-2-naphthylamine, alkylphenyl-1-naphthatalamines and alkyl-phenyl-2-naphthal-amines, as well as sulphur containing compounds, e.g. dithiophosphates, phosphites, sulphides and dithio metal salts, such as benzothiazole, tin-dialkyldithiophosphates and zinc diaryldithiophosphates.

In embodiments of the invention, a composition as defined herein is provided, wherein the composition further comprises an antioxidant in an amount more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises an antiwear agent. Preferably, the antiwear agent is selected from the group consisting of phosphate esters, phosphites, thiophosphites, e.g. zinc dialkyl dithiophosphates, zinc diaryldithiophosphates, tricresyl phosphates, chlorinated waxes, sulphurised fats and olefins, such as thiodipropionic esters, dialkyl sulphides, dialkyl polysulphides, alkylmercaptanes, dibenzothiophenes and 2,2'-dithiobis(benzothiazole); organic lead compounds, fatty acids, halogen substituted organosilicon compounds, and halogen-substituted phosphorus compounds.

In embodiments of the invention, a composition as defined herein is provided, wherein the composition comprises the antiwear agent in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In embodiments of the invention, a composition as defined herein is provided, wherein the composition further comprises a surfactant. Preferably, the surfactant is selected from the group consisting of anionic surfactants, such as anionic surfactants which are the salt of a compound represented by R-X; wherein X represents a sulfate group, a phosphate group, a sulfonate group, or a carboxylate group, preferably a sulfate group; and wherein R is selected from:
- branched or straight chain C₅-C₂₄ alkyl groups;
- branched or straight chain mono-unsaturated C₅-C₂₄ alkenyl groups;
- branched or straight chain poly-unsaturated C₅-C₂₄ alkenyl groups;
- alkylbenzene groups comprising a C₈-C₁₅ alkyl;
- alkenylbenzene groups comprising a C₈-C₁₅ alkenyl;
- alkylnaphthalene groups comprising a C₃-C₁₅ alkyl;
- alkenylnaphthalene groups comprising a C₃-C₁₅ alkenyl;
- alkylphenol groups comprising a C₈-C₁₅ alkyl; and
- alkenylphenol groups comprising a C₈-C₁₅ alkenyl.

In embodiments of the invention, a composition as defined herein is provided, wherein the composition comprises said surfactant in an amount of more than 0.001 wt.% (by total weight of the composition), preferably more than 0.005 wt.%, preferably more than 0.01 wt.% and/or less than 10 wt.%, preferably less than 5 wt.%, preferably less than 3 wt.%.

In certain embodiments of the invention, a composition as defined herein is provided, wherein the composition further comprises a liquid dielectric. Preferred liquid dielectrics are minerals oils, silicon oils and mixtures thereof.

In certain embodiments of the invention the composition provided herein comprises less than 10 wt.% (by total weight of the composition) of the liquid dielectric, preferably less than 5 wt.%, preferably less than 1 wt.%.

In certain embodiments of the invention the composition provided herein comprises more than 0.0001 wt.% (by total weight of the composition) of the liquid dielectric preferably more than 0.001 wt.%, preferably more than 0.01 wt.% and/or less than 10 wt.%, preferably less than 5 wt.%, preferably less than 3 wt.%.

In certain embodiments of the invention the composition provided herein comprises 0.0001-10 wt.% (by total weight of the composition) of the liquid dielectric, preferably 0.001-5 wt.%, preferably 0.01-1 wt.%.

### Varia

In particular embodiments of the invention the compositions described herein are provided wherein the combined concentration of oxalic acid diamide, succinic acid amide, acetamide, 2-pyrrolidone and caprolactam, preferably the combined concentration of oxalic acid diamide, succinic acid amide, succinic acid diamide, acetamide, 2-pyrrolidone and caprolactam is less than 1 wt.% (by total weight of the composition), preferably less than 0.1 wt,%, preferably less than 0.01 wt.%, most preferably about 0 wt.%.

In particular embodiments of the invention the compositions described herein are provided wherein the combined concentration of succinamide, adipamide, propionamide, hexanamide, 2-pyrrolidone, N-methyl-2-pyrrolidone, 2-piperidone and ε-caprolactam is less than 1 wt.% (by total weight of the composition), preferably less than 0.1 wt,%, preferably less than 0.01 wt.%, most preferably about 0 wt.%.

In particular embodiments of the invention the compositions described herein are provided wherein the combined concentration of oxalic acid diamide, succinic acid amide, acetamide, 2-pyrrolidone, succinamide, adipamide, propionamide, hexanamide, caprolactam, N-methyl-2-pyrrolidone and 2-piperidone is less than 1 wt.% (by total weight of the composition), preferably less than 0.1 wt,%, preferably less than 0.01 wt.%, most preferably about 0 wt.%.

In particular preferred embodiments of the invention the compositions described herein are provided wherein the combined concentration of adipamide or N-methyl-2-pyrrolidone is less than 1 wt.% (by total weight of the composition), preferably less than 0.1 wt,%, preferably less than 0.01 wt.%, most preferably about 0 wt.%.

### Composition as a heat-transfer fluid

In highly preferred embodiments, the composition, preferably the ready-to-use composition as described herein is a heat-transfer fluid, preferably a heat-transfer fluid suitable for use in a solar system, a fuel cell, an electrical motor, a generator, a battery, a battery electric vehicle, power electronics or electronic equipment, most preferably a heat-transfer fluid suitable for use in a fuel cell or power electronics.

As will be understood by the skilled person, depending on (for example) the intended application, the compositions in accordance with the invention may be formulated and used at various concentrations. Hence, the invention is not particularly limited by the concentration of aliphatic carboxamide or other additives described herein. Thus, depending on the envisaged application, the compositions described herein may be suitable for use as is, or may require dilution by base fluid before use. However, the present inventors have found that it is particularly advantageous to provide the compositions of the invention in the form of a ready-to-use composition which may be suitable for use as a fuel cell coolant or in the form of a concentrate which is suitable to prepare said ready-to-use composition.

### Ready-to-use

In a highly preferred embodiment of the invention, the composition as described herein is provided in the form of a ready-to-use composition wherein:
- the concentration of the at least one aliphatic carboxamide is within the range of 0.001-10 wt.% (by total weight of the composition), preferably within the range of 0.01-5 wt.%, more preferably within the range of 0.1-5 wt.%; and
- the composition comprises more than 90 wt.% (by total weight of the composition), preferably more than 95 wt.%, preferably more than 98 wt.%, preferably more than 99 wt.% base fluid.

In embodiments of the invention the ready-to-use composition provided herein comprises the at least one aliphatic carboxamide at a concentration of more than 0.002 wt.% (by total weight of the composition), more than 0.005 wt.%, more than 0.01 wt.%, or more than 0.05 wt.%.

In embodiments of the invention the ready-to-use composition provided herein comprises the at least one aliphatic carboxamide at a concentration of less than 8 wt.% (by total weight of the composition), less than 5 wt.%, less than 1 wt.%, less than 0.6 wt.% or less than 0.5 wt.%.

**As** will be understood by the skilled person, in case the composition comprises more than one aliphatic carboxamide as described herein, the concentrations mentioned for the "at least one aliphatic carboxamide" refer to the combined concentration of all aliphatic carboxamides present.

In preferred embodiments the ready-to-use composition as described herein is provided wherein the base fluid consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof; and wherein the amount of the alcohol is in the range of 10-80 wt.% (by total weight of the composition), preferably 30-70 wt.%. In particular embodiments the amount of the alcohol is in the range of 10-45 wt.% (by total weight of the composition).

In highly preferred embodiments the ready-to-use composition has a conductivity at 25 °C of less than 25 µS/cm, preferably less than 10 µS/cm, more preferably less than 5 µS/cm, wherein the conductivity is determined after aging the heat-transfer fluid at 90°C for 14 days.

### Concentrate

In a preferred embodiment of the invention the composition as described herein is provided in the form of a concentrate comprising a base fluid which consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof, wherein the alcohol is present in an amount in the range of 10-99 wt.% (by weight of the base fluid), preferably 30-70 wt.% suitable to prepare the ready-to-use composition described herein solely by addition of water and/or alcohol; preferably solely by addition of water, monoethylene glycol, monopropylene glycol, 1,3-propanediol and/or glycerol; most preferably solely by addition of water.

In preferred embodiments, the concentrate is suitable to prepare the ready-to-use composition described herein by addition of water and/or alcohol; preferably by addition of water, monoethylene glycol, monopropylene glycol, 1,3-propanediol and/or glycerol; most preferably by addition of water. In highly preferred embodiments, the concentrate is suitable to prepare the ready-to-use composition solely by addition of water and/or alcohol; preferably solely by addition of water, monoethylene glycol, monopropylene glycol, 1,3-propanediol and/or glycerol; most preferably solely by addition of water (i.e. no other ingredients need to be added in order to prepare the ready-to-use composition described herein from the concentrate).

In embodiments the concentrate is provided wherein the concentration of the aliphatic carboxamide is more than 0.1 wt.% (by total weight of the composition), preferably more than 0.5 wt.%, more preferably more than 1 wt.%.

In preferred embodiments the concentrate is provided wherein the concentration of the aliphatic carboxamide is within the range of 0.1-0.5 wt.% (by total weight of the composition).

In preferred embodiments the concentrate is provided wherein the concentration of the aliphatic carboxamide is within the range of 0.5-50 wt.% (by total weight of the composition), preferably 10-50 wt.%.

In preferred embodiments the concentrate comprises a base fluid as defined herein and an aliphatic carboxamide as defined herein wherein the concentration of the aliphatic carboxamide is more than 0.1 wt.% (by total weight of the composition), preferably more than 1 wt.% and wherein more than 80 wt.%, preferably more than 85 wt.%, preferably more than 90 wt.% of the concentrate is an alcohol, preferably an alcohol selected from the group consisting of monoethylene glycol, monopropylene glycol, 1,3-propanediol and glycerol, most preferably monoethylene glycol.

In preferred embodiments the concentrate comprises a base fluid as defined herein and an aliphatic carboxamide as defined herein wherein the concentration of the aliphatic carboxamide is more than 0.1 wt.% (by total weight of the composition), preferably more than 1 wt.% and wherein more than 80 wt.%, preferably more than 85 wt.%, preferably more than 90 wt.% of the concentrate is water.

### Methods of preparation

In another aspect of the disclosure, not part of the invention there is provided a method to prepare a composition as defined herein, comprising the steps of:
(i) providing a base fluid as defined herein;
(ii) providing an aliphatic carboxamide as defined herein;
(iii) optionally providing further additives as defined herein; and
(iv) combining the base fluid of step (i) with the aliphatic carboxamide of step (ii) and the optional further additives of step (iii) to obtain the composition.

In accordance with the disclosure, not part of the invention, the order of addition of the compounds is not particularly limited.

In another aspect of the disclosure, not part of the inventionthere is provided a method to prepare a ready-to-use composition as defined herein, comprising the steps of:
(i) providing a concentrate as defined herein;
(ii) providing water, alcohol or a mixture thereof;
(iii) optionally providing further additives as defined herein; and
(iv) combining the concentrate of step (i) with the water, alcohol or a mixture thereof of step (ii) and the optional further additives of step (iv) to obtain the ready-to-use composition.

In preferred embodiments of the disclosure, not part of the invention, there is provided a method to prepare a ready-to-use composition as defined herein, consisting of the following steps:
(i) providing a concentrate as defined herein;
(ii) providing water, alcohol or a mixture thereof;
(iii) combining the concentrate of step (i) with the water, alcohol or a mixture thereof of step (ii) to obtain the ready-to-use composition.

In accordance with the disclosure, not part of the invention,the alcohol of step two is selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof; preferably from the group consisting of monoethylene glycol, monopropylene glycol, 1,3-propanediol and combinations thereof.

In preferred embodiments step (ii) comprises providing more than 50 wt.% (by weight of the concentrate) water, alcohol or a mixture thereof, preferably more than 100 wt.%, more than 150 wt.% more than 200 wt.% or more than 500 wt.% water, alcohol or a mixture thereof.

### Other

In embodiments of the invention, a composition, preferably a ready-to-use composition as defined herein is provided, wherein the composition has a pH between 3 and 8, more preferably between 3.5 and 7.

In embodiments of the invention, a composition, preferably a ready-to-use composition as defined herein is provided, wherein the weight ratio of aliphatic carboxamide to the alcohol comprised in the base fluid is less than 0.05, preferably less than 0.02, more preferably less than 0.01, most preferably less than 0.007.

### Uses/methods

In another aspect of the disclosure, not part of the invention, there is provided an electrical system, preferably an electrical system selected from the group consisting of a solar system, a fuel cell, an electrical motor, a generator, a battery, a telephone transmission station, a radio and television broadcast station, a relay station, an electrical heating or cooling device, preferably a fuel cell; wherein the electrical system further comprises the composition, preferably the ready-to-use composition described herein.

In another aspect the disclosure, not part of the invention, provides the use of an aliphatic carboxamide as described herein:
- for inhibiting the formation of glycolate or formate ions in a glycol based coolant, preferably in a monoethylene glycol based coolant;
- for maintaining low conductivity in a glycol based coolant;
- as a low conductivity heat-transfer fluid additive or inhibitor;
- as a low conductivity heat-transfer fluid additive or inhibitor at a lower dose than aromatic amides; or
- as a low conductivity heat-transfer fluid additive or inhibitor of improved performance compared to aromatic amides.

In another aspect of the invention there is provided the use of the composition, preferably the ready-to-use composition described herein as a heat-transfer fluid or coolant, preferably as a heat-transfer fluid or coolant in an electrical system, more preferably as a heat-transfer fluid or coolant in an electrical system selected from the group consisting of a solar system, a fuel cell, an electrical motor, a generator, a battery, a telephone transmission station, power electronics, a radio and television broadcast station, a relay station, an electrical heating or cooling device, preferably a fuel cell or power electronics.

In another aspect of the disclosure, not part of the invention, there is provided a method of exchanging heat comprising:
a. generating heat in an electrical system, preferably an electrical system selected from the group consisting of a solar system, a fuel cell, an electrical motor, a generator, a battery, a telephone transmission station, power electronics, a radio and television broadcast station, a relay station, an electrical heating or cooling device, preferably a fuel cell or power electronics;
b. contacting a composition as described herein, preferably a ready-to-use composition as described herein with the system of step a;
c. transferring heat from the system to the composition;
d. passing the composition through a heat exchanger; and
e. transferring heat away from the composition.

### Examples

The surprising behaviour of compositions in accordance with the invention, and specifically the conductivity upon ageing, even in the presence of metal, was demonstrated by immersion of an aluminium specimen in compositions with different inventive or comparative compounds and ageing the composition for 14 days at 90 °C.

Twelve compositions (examples 1-12) were prepared by adding 2.25 mmol of amide inhibitor per 100g of monoethylene glycol. These coolant concentrates were subsequently diluted with ultra-purified water (UPW) to obtain a composition consisting of 33 vol.% monoethylene glycol concentrate in water . The inhibitors used in the different examples are detailed in tables 1 and 2. Examples 1-8 are comparative examples, while examples 9-14 detail compositions in accordance with the present invention. The pH and electrical conductivity (eConduc) were measured before ageing and are listed in tables 1 and 2. Subsequently, 100 mL glass bottles were rinsed with UPW and dried overnight at 90 °C. Aluminium EN AC-AlSi10Mg(a)T6, DIN EN 1706) coupons were polished using P240 sanding paper, rinsed with UPW and acetone, dried for 1 h at 100 °C and weighed. The coupons were added to the bottles and filled with 100 mL of the composition of examples 1-14 (*in duplo*) and the bottles were placed in an oven at 90 °C. After 14 days the bottles were taken out of the oven and the electric conductivity and pH of the aged compositions was measured. The glycolate and formate concentration in aged the compositions was determined by ion chromatography. All coupons were gently cleaned with water and a soft bristle brush, dried and weighed (coupon AT). Finally, all coupons were chemically cleaned by placing them in a mixture of HNO₃:UPW 4:1 for 10 min. The coupons were further cleaned with water and a soft bristle brush, dried at 100 °C for 1 h and weighed (coupon CC).

**Table 1: Comparative examples 1-8**

| | | *Before aging* | | *After aging* | | | |
|---|---|---|---|---|---|---|---|
| | | **pH** | **eCond (µS/cm)** | **ΔeCond (µs/cm)** | **glycolate (ppm)** | **formate (ppm)** | **Δm (CC, g)¹** |
| 1 | Blank | 3,9 | 0,6 | 37 | 58 | 28 | -2,22 |
| 2 | 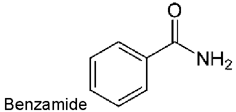 | 3,6 | 8,2 | 37 | 68 | 48 | -2,6 |
| 3 | 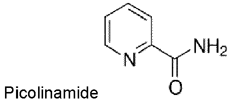 | 4,0 | 1,22 | 38 | 39 | 29 | -2,8 |
| 4 | 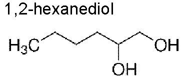 | 3,4 | 4 | 50 | 62 | 71 | -2,2 |
| 5 | 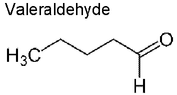 | 3,4 | 2,9 | 54 | 84 | 64 | -1,7 |
| 6 | 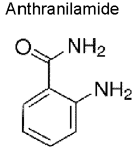 | 4,0 | 10,5 | 28 | 6 | 66 | -1,4 |
| 7 | 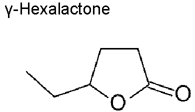 | not determined | 2,74 | 50 | 68 | 54 | -1,55 |
| 8 | 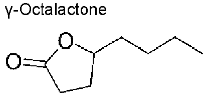 | 3,5 | 0,81 | 38 | 47 | 34 | -3,05 |

| | | | | | | | |
|---|---|---|---|---|---|---|---|
| ¹a negative sign indicates weight gain | | | | | | | |

**Table 2: Examples 9-14**

| *Before aging* | | *After aging* | | | | | |
|---|---|---|---|---|---|---|---|
| | | **pH** | **eCond (µS/cm)** | **ΔeCοnd (µs/cm)** | **glycolate (ppm)** | **formate (ppm)** | **Δm (CC, g)¹** |
| 9 | 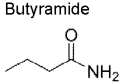 | 4,6 | 2,58 | 12 | 5 | 7 | -2,3 |
| 11 | 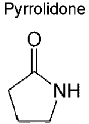 | 4,3 | 0,8 | 10 | 14 | 5 | -2,4 |
| 12 | 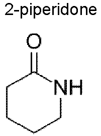 | 4,4 | 1,26 | 11 | 10 | 8 | -2,6 |
| 13 | 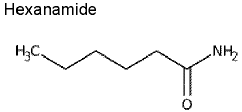 | 5,8 | 7,96 | 14 | 13 | 3 | -3,15 |
| 14 | 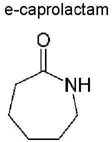 | 4,2 | 1,98 | 16 | 16 | 13 | -2,65 |

| | | | | | | | |
|---|---|---|---|---|---|---|---|
| ¹a negative sign indicates weight gain | | | | | | | |

As can been seen from the above results, while most examples 1-8 exhibit comparable low conductivity values in the non-aged samples, the low conductivity and glycol breakdown acid content of compositions using aliphatic carboxamides (examples 9-14) is surprisingly and unexpectedly not significantly influenced upon ageing.

## Claims

1. A composition comprising a base fluid and a least one aliphatic carboxamide having a molecular weight of less than 500 g/mol; wherein the composition has a conductivity at 25 °C of less than 25 µS/cm; wherein the base fluid consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof; wherein the alcohol is present in an amount in the range of 10-99 wt.% (by weight of the base fluid), preferably 30-70 wt.%, wherein the aliphatic carboxamide is not adipamide and/or N-methyl-2-pyrrolidone.

2. The composition according to claim 1 wherein the alcohol is present in an amount in the range of 30-70 wt.% (by weight of the base fluid).

3. The composition according to claim 1 or 2 wherein the composition further comprises one or more additives selected from the group consisting of thiazoles, triazoles, polyolefins, polyalkylene oxides, silicon oils, mineral oils, silicates, aliphatic monocarboxylic acids, aliphatic dicarboxylic acids, aliphatic tricarboxylic acids, molybdates, nitrates, nitrites, phosphonates and phosphates, preferably wherein the composition comprises one or more of the following:
• an aliphatic monocarboxylate, preferably an aliphatic monocarboxylate selected from the group consisting of C₄-C₁₂ aliphatic monocarboxylates;
• an aliphatic dicarboxylate, preferably an aliphatic dicarboxylate selected from the group consisting of C₆-C₁₆ aliphatic dicarboxylates; or
• an aliphatic tricarboxylate, preferably an aliphatic tricarboxylate selected from the group consisting of C₇-C₁₈ aliphatic tricarboxylates.

4. The composition according to any one of claims 1-3 wherein the aliphatic carboxamide comprises 2 to 16 carbon atoms, preferably the aliphatic carboxamide comprises 2 to 10 carbon atoms, more preferably the aliphatic carboxamide comprises 4 to 6 carbon atoms; the aliphatic carboxamide comprises one or two carboxamide groups; the carboxamide groups are primary or secondary carboxamide groups; and the aliphatic carboxamide does not comprise any heteroatoms aside from the heteroatoms comprised in the carboxamide groups.

5. The composition according to any one of claims 1-3 wherein the aliphatic carboxamide is a compound of formula (I) 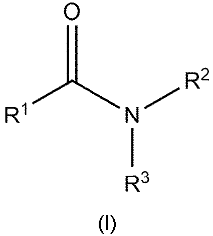
**wherein** R¹, R² and R³ independently represent H, an unsubstituted C₁ - C₁₀ straight chain, branched or cyclic alkyl, an unsubstituted C₂ - C₁₀ straight chain, branched or cyclic alkenyl or an unsubstituted C₂ - C₁₀ straight chain or branched alkynyl;
preferably R¹, R² and R³ individually represent a C₁ - C₁₀ straight chain, branched or cyclic alkyl, a C₂ - C₁₀ straight chain, branched or cyclic alkenyl or a C₂ - C₁₀ straight chain or branched alkynyl and one or both of R² and R³ represents H or methyl;
more preferably R¹ represents a C₁ - C₁₀ straight chain, branched or cyclic alkyl and one or both of R² and R³ represents H or methyl;
most preferably R¹ represents a C₁ - C₁₀ straight chain, branched or cyclic alkyl and both of R² and R³ represent H;
or wherein the aliphatic carboxamide is a compound of formula (II) 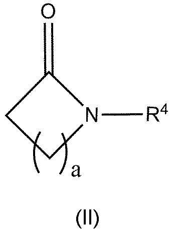
wherein a is an integer selected from 1-8 and R⁴ represents H, an unsubstituted C₁ - C₁₀ straight chain, branched or cyclic alkyl, an unsubstituted C₂ - C₁₀ straight chain, branched or cyclic alkenyl or an unsubstituted C₂ - C₁₀ straight chain or branched alkynyl;
preferably a is an integer selected from 1-5 and R⁴ represents H or methyl;
most preferably a is an integer selected from 1-5 and R⁴ represents H;
or wherein the aliphatic carboxamide is a compound of formula (III) 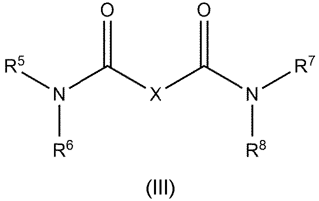
wherein X represents an unsubstituted C₁ - C₁₀ straight chain, branched or cyclic alkanediyl, an unsubstituted C₂ - C₁₀ straight chain, branched or cyclic alkenediyl or an unsubstituted C₂ - C₁₀ straight chain or branched alkynediyl and R⁵, R⁶, R⁷ and R⁸ independently represent H or methyl;
preferably X represents an unsubstituted C₁ - C₁₀ straight chain, branched or cyclic alkanediyl, and R⁵, R⁶, R⁷ and R⁸ independently represent H or methyl;
more preferably X represents an unsubstituted C₁ - C₁₀ straight chain, branched or cyclic alkanediyl, and R⁵, R⁶, R⁷ and R⁸ represent H.
wherein the aliphatic carboxamide is not adipamide and/or N-methyl-2-pyrrolidone.

6. The composition according to claim 5 wherein the aliphatic carboxamide is one of the following compounds (I)a-(I)j, (II)a-(IId) or (III)a-(Ill)j:
| | Compound |
|---|---|
| 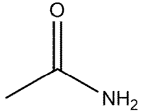 | (I)a |
| 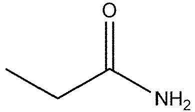 | (I)b |
| 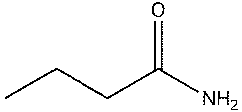 | (I)c |
| 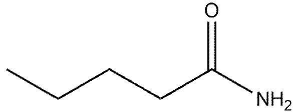 | (I)d |
| 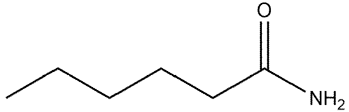 | (I)e |
| 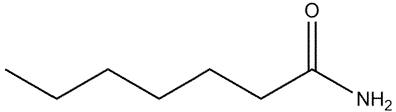 | (I)f |
| 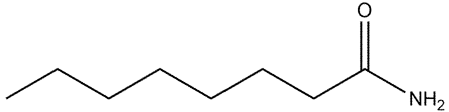 | (I)g |
| 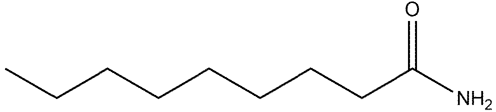 | (I)h |
| 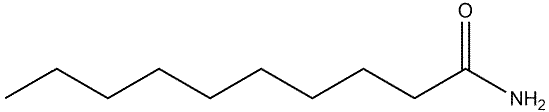 | (I)i |
| 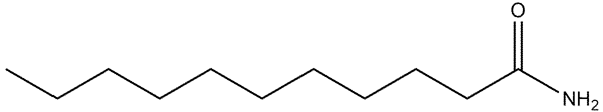 | (I)j |
| | Compound |
|---|---|
| 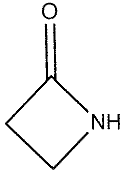 | (II)a |
| 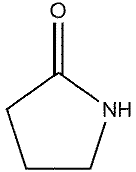 | (II)b |
| 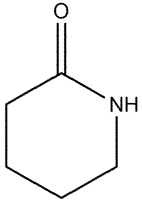 | (II)c |
| 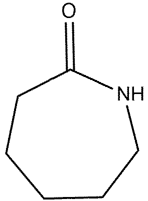 | (II)d |
| | Compound |
|---|---|
| 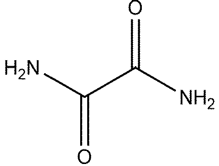 | (III)a |
| 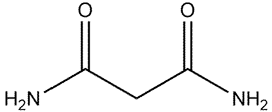 | (III)b |
| 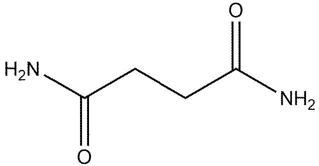 | (III)c |
| 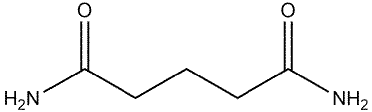 | (III)d |
| 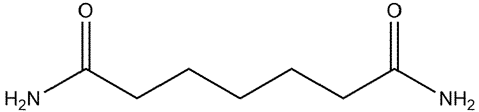 | (III)f |
| 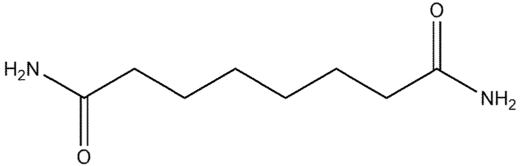 | (III)g |
| 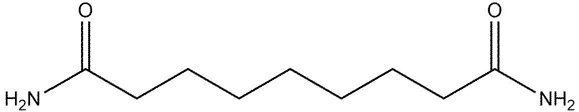 | (III)h |
| 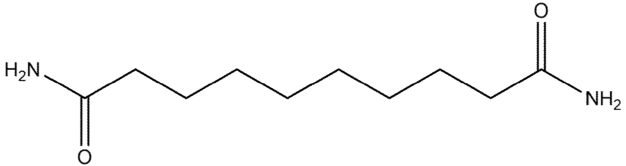 | (III)i |
| 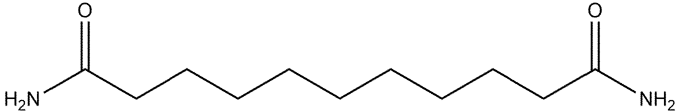 | (III)j |

7. The composition according to claim 6, wherein the aliphatic carboxamide is a compound selected from the group consisting of (I)b-(I)j, preferably (I)b-(I)g, more preferably (I)b-(I)d.

8. The composition according to claim 6, wherein the aliphatic carboxamide is a compound selected from the group consisting of (II)a, (II)c and (II)e, preferably (II)c and (II)e, more preferably (II)c.

9. The composition according to claim 6, wherein the aliphatic carboxamide is a compound selected from the group consisting of (III)d-(III)j, preferably (III)f-(III)h, more preferably (III)f-(III)g, wherein the aliphatic carboxamide is not adipamide.

10. The composition according to any one of claims 1-9 wherein the aliphatic carboxamide is not oxalic acid diamide, succinic acid amide, acetamide, 2-pyrrolidone or caprolactam, preferably the aliphatic carboxamide is not oxalic acid diamide, succinic acid amide, succinic acid diamide, acetamide, 2-pyrrolidone or caprolactam.

11. The composition according to any one of claims 1-10 which is provided in the form of a ready-to-use composition which is a heat-transfer fluid wherein:
• the concentration of the at least one aliphatic carboxamide is within the range of 0.001-10 wt.% (by total weight of the composition), preferably within the range of 0.01-5 wt.%, more preferably within the range of 0.1-5 wt.%; and
• the composition comprises more than 90 wt.% (by total weight of the composition), preferably more than 95 wt.%, preferably more than 98 wt.%, preferably more than 99 wt.% base fluid.

12. The composition according to claim 11 wherein the concentration of the aliphatic carboxamide is less than 0.6 wt.% or less than 0.5 wt.%.

13. The composition according to claim 11 wherein
• the base fluid consists of water and an alcohol selected from the group consisting of monoethylene glycol, monopropylene glycol, 1,3-propanediol, glycerol or mixtures thereof wherein the alcohol is present in an amount in the range of 30-70 wt.% (by weight of the base fluid);
• the aliphatic carboxamide is a compound selected from the group consisting of (I)b, (I)c, (I)d, (I)e, (I)f, (I)g, (I)h, (I)i, (I)j, (II)a, (II)c, (III)b, (III)d, (III)f, (III)g, (III)h, (III)i, and (III)j;
• the composition has a pH between 3 and 8;
• the composition comprises a C₄-C₁₂ aliphatic monocarboxylate, a C₆-C₁₆ aliphatic dicarboxylate; or a C₇-C₁₈ aliphatic tricarboxylates.

14. The composition according to any one of claims 1-10 which is provided in the form of a concentrate comprising a base fluid which consists of water and an alcohol selected from the group consisting of monoethylene glycol, diethylene glycol, triethylene glycol, tetraethylene glycol, pentaethylene glycol, hexaethylene glycol, monopropylene glycol, 1,3-propanediol, dipropylene glycol, tripropylene glycol, tetrapropylene glycol, pentapropylene glycol, hexapropylene glycol, methanol, ethanol, propanol, butanol, tetrahydrofurfuryl, ethoxylated furfuryl, dimethyl ether of glycerol, sorbitol, 1,2,6 hexanetriol, trimethylolpropane, methoxyethanol, and glycerol, preferably selected from the group consisting of monoethylene glycol, monopropylene glycol, 1,3-propanediol, glycerol or mixtures thereof, wherein the alcohol is present in an amount in the range of 10-99 wt.% (by weight of the base fluid), preferably 30-70 wt.% suitable to prepare the ready-to-use composition according to any one of claims 11-13 solely by addition of water and/or alcohol; preferably solely by addition of water, monoethylene glycol, monopropylene glycol, 1,3-propanediol and/or glycerol; most preferably solely by addition of water.

15. Use of the composition of any one of claims 1-14, preferably the ready-to-use composition according to any one of claims 11-13 as a heat-transfer fluid or coolant.

## Patentansprüche

1. Zusammensetzung, umfassend ein Basisfluid und mindestens ein aliphatisches Carboxamid mit einem Molekulargewicht von weniger als 500 g/mol; wobei die Zusammensetzung eine Leitfähigkeit bei 25 °C von weniger als 25 µS/cm aufweist; wobei das Basisfluid aus Wasser und einem Alkohol besteht, der ausgewählt ist aus der Gruppe bestehend aus Monoethylenglykol, Diethylenglykol, Triethylenglykol, Tetraethylenglykol, Pentaethylenglykol, Hexaethylenglykol, Monopropylenglykol, 1,3-propandiol, Dipropylenglykol, Tripropylenglykol, Tetrapropylenglykol, Pentapropylenglykol, Hexapropylenglykol, Methanol, Ethanol, Propanol, Butanol, Tetrahydrofurfuryl, ethoxyliertem Furfuryl, Dimethylether von Glycerin, Sorbitol, 1,2,6-Hexantriol, Trimethylolpropan, Methoxyethanol und Glycerin, vorzugsweise ausgewählt aus der Gruppe bestehend aus Monoethylenglykol, Monopropylenglykol, 1,3-Propandiol, Glycerin oder Mischungen davon; wobei der Alkohol in einer Menge im Bereich von 10-99 Gew.-% (bezogen auf das Gewicht des Basisfluids) vorhanden ist, vorzugsweise 30-70 Gew.-%, wobei das aliphatische Carboxamid nicht Adipamid und/oder N-Methyl-2-pyrrolidon ist.

2. Zusammensetzung nach Anspruch 1, wobei der Alkohol in einer Menge im Bereich von 30-70 Gew.-% (bezogen auf das Gewicht des Basisfluids) vorhanden ist.

3. Zusammensetzung nach Anspruch 1 oder 2, wobei die Zusammensetzung zusätzlich ein oder mehrere Additiv(e) umfasst, ausgewählt aus der Gruppe bestehend aus Thiazolen, Triazolen, Polyolefinen, Polyalkylenoxiden, Silikonölen, Mineralölen, Silikaten, aliphatischen Monocarbonsäuren, aliphatischen Dicarbonsäuren, aliphatischen Tricarbonsäuren, Molybdaten, Nitraten, Nitriten, Phosphonaten und Phosphaten, wobei die Zusammensetzung vorzugsweise eines oder mehrere der Folgenden umfasst:
• ein aliphatisches Monocarboxylat, vorzugsweise ein aliphatisches Monocarboxylat, ausgewählt aus der Gruppe bestehend aus C₄-C₁₂-aliphatischen Monocarboxylaten;
• ein aliphatisches Dicarboxylat, vorzugsweise ein aliphatisches Dicarboxylat, ausgewählt aus der Gruppe bestehend aus C₆-C₁₆-aliphatischen Dicarboxylaten; oder
• ein aliphatisches Tricarboxylat, vorzugsweise ein aliphatisches Tricarboxylat, ausgewählt aus der Gruppe bestehend aus C₇-C₁₈-aliphatischen Tricarboxylaten.

4. Zusammensetzung nach einem der Ansprüche 1-3, wobei das aliphatische Carboxamid 2 bis 16 Kohlenstoffatome umfasst, vorzugsweise umfasst das aliphatische Carboxamid 2 bis 10 Kohlenstoffatome, noch bevorzugter umfasst das aliphatische Carboxamid 4 bis 6 Kohlenstoffatome; das aliphatische Carboxamid umfasst eine oder zwei Carboxamidgruppen; die Carboxamidgruppen sind primäre oder sekundäre Carboxamidgruppen; und das aliphatische Carboxamid umfasst keine Heteroatome außer den in den Carboxamidgruppen enthaltenen Heteroatomen.

5. Zusammensetzung nach einem der Ansprüche 1-3, wobei das aliphatische Carboxamid eine Verbindung der Formel (I) ist 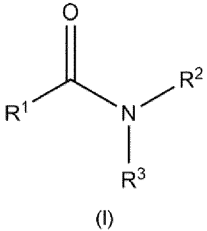
wobei R¹, R² und R³ unabhängig voneinander H, ein unsubstituiertes C₁-C₁₀-geradkettiges, verzweigtes oder cyclisches Alkyl, ein unsubstituiertes C₂-C₁₀-geradkettiges, verzweigtes oder cyclisches Alkenyl oder eine unsubstituiertes C₂-C₁₀-geradkettiges oder verzweigtes Alkinyl bedeuten;
vorzugsweise bedeuten R¹, R² und R³ jeweils ein C₁-C₁₀-geradkettiges, verzweigtes oder cyclisches Alkyl, ein C₂-C₁₀-geradkettiges, verzweigtes oder cyclisches Alkenyl oder ein C₂-C₁₀-geradkettiges oder verzweigtes Alkinyl und einer oder beide der Reste R² und R³ bedeuten H oder Methyl;
bevorzugter bedeutet R¹ ein C₁-C₁₀-geradkettiges, verzweigtes oder cyclisches Alkyl und einer oder beide der Reste R² und R³ bedeuten H oder Methyl;
am meisten bevorzugt bedeutet R¹ ein C₁-C₁₀-geradkettiges, verzweigtes oder cyclisches Alkyl und beide der Reste R² und R³ bedeuten H;
oder wobei das aliphatische Carboxamid eine Verbindung der Formel (II) ist 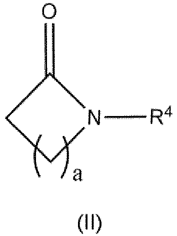
wobei a eine ganze Zahl von 1 bis 8 ist und R⁴ H, ein unsubstituiertes C₁ - C₁₀-geradkettiges, verzweigtes oder cyclisches Alkyl, ein unsubstituiertes C₂ - C₁₀-geradkettiges, verzweigtes oder cyclisches Alkenyl oder ein unsubstituiertes C₂ - C₁₀-geradkettiges oder verzweigtes Alkinyl bedeutet;
vorzugsweise ist a eine ganze Zahl ausgewählt aus 1-5 und R⁴ bedeutet H oder Methyl;
am meisten bevorzugt ist a eine ganze Zahl ausgewählt aus 1-5 und R⁴ bedeutet H;
oder wobei das aliphatische Carboxamid eine Verbindung der Formel (III) ist 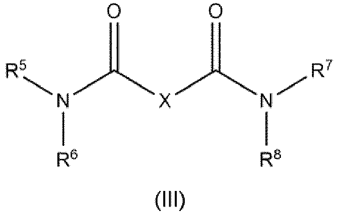
wobei X ein unsubstituiertes C₁ - C₁₀-geradkettiges, verzweigtes oder cyclisches Alkandiyl, ein unsubstituiertes C₂ - C₁₀-geradkettiges, verzweigtes oder cyclisches Alkendiyl oder ein unsubstituierte C₂ - C₁₀-geradkettiges oder verzweigtes Alkindiyl bedeutet und R⁵, R⁶, R⁷ und R⁸ unabhängig voneinander H oder Methyl bedeuten; vorzugsweise bedeutet X ein unsubstituiertes C₁ - C₁₀-geradkettiges, verzweigtes oder cyclisches Alkandiyl und R⁵, R⁶, R⁷ und R⁸ bedeuten unabhängig voneinander H oder Methyl;
bevorzugter bedeutet X ein unsubstituiertes C₁ - C₁₀-geradkettiges, verzweigtes oder cyclisches Alkandiyl und R⁵, R⁶, R⁷ und R⁸ bedeuten H.
wobei das aliphatische Carboxamid nicht Adipamid und/oder N-Methyl-2-pyrrolidon ist.

6. Zusammensetzung nach Anspruch 5, wobei das aliphatische Carboxamid eine der folgenden Verbindungen (I)a-(I)j, (II)a-(IId) oder (III)a-(III)j ist:
| | Verbindung |
|---|---|
| 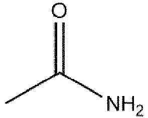 | (I)a |
| 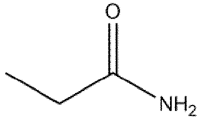 | (I)b |
| 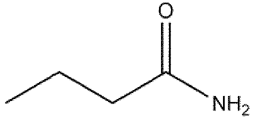 | (I)c |
| 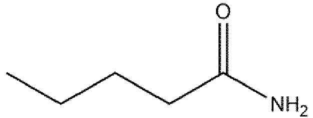 | (I)d |
| 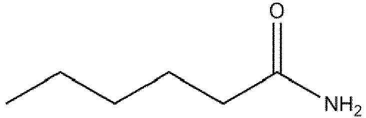 | (I)e |
| 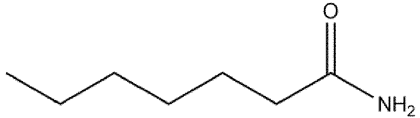 | (I)f |
| 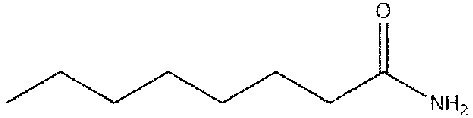 | (I)g |
| 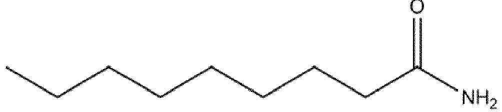 | (I)h |
| 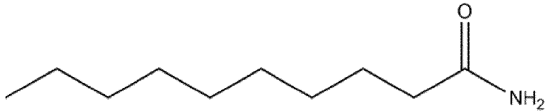 | (I)i |
| 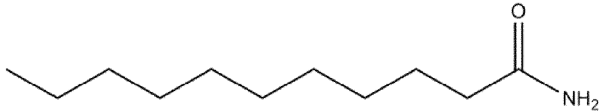 | (I)j |
| | Verbindung |
|---|---|
| 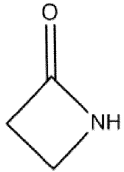 | (II)a |
| 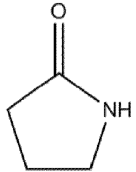 | (II)b |
| 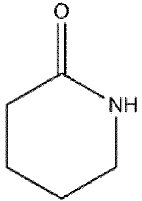 | (II)c |
| 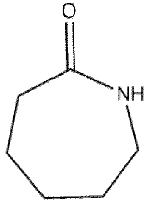 | (II)d |
| | Verbindung |
|---|---|
| 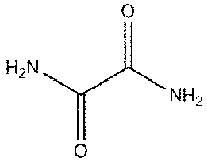 | (III)a |
| 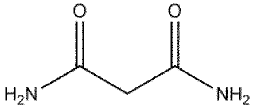 | (III)b |
| 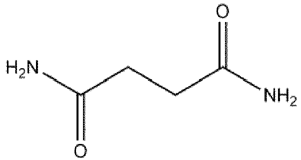 | (III)c |
| 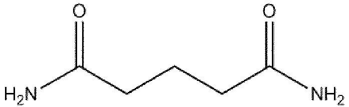 | (III)d |
| 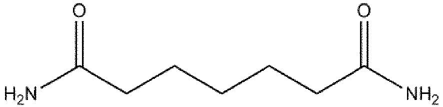 | (III)f |
| 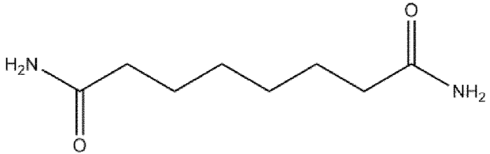 | (III)g |
| 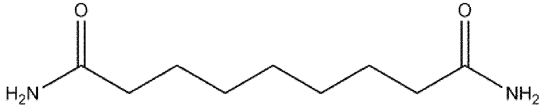 | (III)h |
| 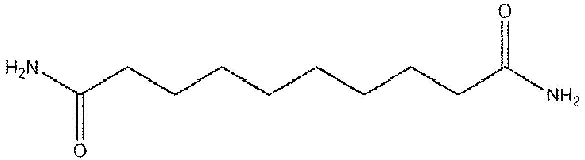 | (III)i |
| 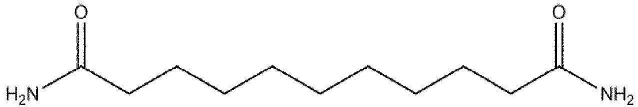 | (III)j |

7. Zusammensetzung nach Anspruch 6, wobei das aliphatische Carboxamid eine Verbindung ausgewählt aus der Gruppe bestehend aus (I)b-(I)j, vorzugsweise (I)b-(I)g, noch bevorzugter (I)b-(I)d ist.

8. Zusammensetzung nach Anspruch 6, wobei das aliphatische Carboxamid eine Verbindung ausgewählt aus der Gruppe bestehend aus (II)a, (II)c und (II)e, vorzugsweise (II)c und (II)e, noch bevorzugter (II)c ist.

9. Zusammensetzung nach Anspruch 6, wobei das aliphatische Carboxamid eine Verbindung ausgewählt aus der Gruppe bestehend aus (III)d-(III)j, vorzugsweise (III)f-(III)h, noch bevorzugter (III)f-(III)g ist, wobei das aliphatische Carboxamid nicht Adipamid ist.

10. Zusammensetzung nach einem der Ansprüche 1-9, wobei das aliphatische Carboxamid nicht Oxalsäurediamid, Bernsteinsäureamid, Acetamid, 2-Pyrrolidon oder Caprolactam ist, vorzugsweise ist das aliphatische Carboxamid nicht Oxalsäurediamid, Bernsteinsäureamid, Bernsteinsäurediamid, Acetamid, 2-Pyrrolidon oder Caprolactam.

11. Zusammensetzung nach einem der Ansprüche 1-10, die in Form einer gebrauchsfertigen Zusammensetzung bereitgestellt wird, die ein Wärmeübertragungsfluid ist, wobei:
• die Konzentration des mindestens einen aliphatischen Carboxamids im Bereich von 0,001 bis 10 Gew.-% (bezogen auf das Gesamtgewicht der Zusammensetzung), vorzugsweise im Bereich von 0,01 bis 5 Gew.-%, noch bevorzugter im Bereich von 0,1 bis 5 Gew.-% liegt; und
• die Zusammensetzung mehr als 90 Gew.-% (bezogen auf das Gesamtgewicht der Zusammensetzung), vorzugsweise mehr als 95 Gew.-%, vorzugsweise mehr als 98 Gew.-%, vorzugsweise mehr als 99 Gew.-% Basisfluid umfasst.

12. Zusammensetzung nach Anspruch 11, wobei die Konzentration des aliphatischen Carboxamids weniger als 0,6 Gew.-% oder weniger als 0,5 Gew.-% beträgt.

13. Zusammensetzung nach Anspruch 11, wobei
• das Basisfluid aus Wasser und einem Alkohol besteht, der aus der Gruppe ausgewählt ist, die aus Monoethylenglykol, Monopropylenglykol, 1,3-Propandiol, Glycerin oder Mischungen davon besteht, wobei der Alkohol in einer Menge im Bereich von 30-70 Gew.-% (bezogen auf das Gewicht des Basisfluids) vorhanden ist;
• das aliphatische Carboxamid eine Verbindung ist, ausgewählt aus der Gruppe bestehend aus (I)b, (I)c, (I)d, (I)e, (I)f, (I)g, (I)h, (I)i, (I)j, (II)a, (II)c, (III)b, (III)d, (III)f, (III)g, (III)h, (III)i und (III)j;
• die Zusammensetzung einen pH-Wert zwischen 3 und 8 aufweist;
• die Zusammensetzung ein C₄-C₁₂-aliphatisches Monocarboxylat, ein C₆-C₁₆-aliphatisches Dicarboxylat; oder ein C₇-C₁₈-aliphatisches Tricarboxylat umfasst.

14. Zusammensetzung nach einem der Ansprüche 1-10, die in Form eines Konzentrats bereitgestellt wird, das ein Basisfuid umfasst, das aus Wasser und einem Alkohol besteht, der aus der Gruppe ausgewählt ist, die aus Monoethylenglykol, Diethylenglykol, Triethylenglykol, Tetraethylenglykol, Pentaethylenglykol, Hexaethylenglykol, Monopropylenglykol, 1,3-Propandiol, Dipropylenglykol, Tripropylenglykol, Tetrapropylenglykol, Pentapropylenglykol, Hexapropylenglykol, Methanol, Ethanol, Propanol, Butanol, Tetrahydrofurfuryl, ethoxyliertem Furfuryl, Dimethylether von Glycerin, Sorbitol, 1,2,6-Hexantriol, Trimethylolpropan, Methoxyethanol und Glycerin besteht, vorzugsweise ausgewählt aus der Gruppe bestehend aus Monoethylenglykol, Monopropylenglykol, 1,3-Propandiol, Glycerin oder Mischungen davon, wobei der Alkohol in einer Menge im Bereich von 10-99 Gew.-% (bezogen auf das Gewicht des Basisfluids) vorhanden ist, vorzugsweise 30-70 Gew.-%, geeignet zur Herstellung der gebrauchsfertigen Zusammensetzung nach einem der Ansprüche 11-13 allein durch Zugabe von Wasser und/oder Alkohol; vorzugsweise allein durch Zugabe von Wasser, Monoethylenglykol, Monopropylen-glykol, 1,3-Propandiol und/oder Glycerin; am meisten bevorzugt allein durch Zugabe von Wasser.

15. Verwendung der Zusammensetzung nach einem der Ansprüche 1-14, vorzugsweise der gebrauchsfertigen Zusammensetzung nach einem der Ansprüche 11-13, als Wärmeübertragungsfluid oder Kühlmittel.

## Revendications

1. Composition comprenant un fluide de base et au moins un carboxamide aliphatique ayant un poids moléculaire inférieur à 500 g/mol ; où la composition a une conductivité à 25 °C inférieure à 25 µS/cm; où le fluide de base est constitué d'eau et d'un alcool choisi dans le groupe constitué par le monoéthylène glycol, le diéthylène glycol, le triéthylène glycol, le tétraéthylène glycol, le pentaéthylène glycol, l'hexaéthylène glycol, le monopropylène glycol, le 1,3-propanediol, le dipropylène glycol, le tripropylène glycol, le tétrapropylène glycol, le pentapropylène glycol, l'hexapropylène glycol, le méthanol, l'éthanol, le propanol, le butanol, le tétrahydrofurfuryle, le furfuryle éthoxylé, l'éther diméthylique de glycérol, le sorbitol, le 1,2,6-hexanetriol, le triméthylolpropane, le méthoxyéthanol et le glycérol, de préférence choisis dans le groupe constitué par le monoéthylène glycol, le monopropylène glycol, le 1,3-propanediol, le glycérol ou les mélanges de ceux-ci ; où l'alcool est présent en une quantité comprise entre 10 et 99 % en poids (par rapport au poids du fluide de base), de préférence de 30 à 70 % en poids, où le carboxamide aliphatique n'est pas de l'adipamide et/ou de la N-méthyl-2-pyrrolidone.

2. Composition selon la revendication 1, où l'alcool est présent en une quantité comprise entre 30 et 70 % en poids (par rapport au poids du fluide de base).

3. Composition selon la revendication 1 ou 2, où la composition comprend en outre un ou plusieurs additifs choisis dans le groupe constitué par les thiazoles, les triazoles, les polyoléfines, les oxydes de polyalkylène, les huiles de silicone, les huiles minérales, les silicates, les acides monocarboxyliques aliphatiques, les acides dicarboxyliques aliphatiques, les acides tricarboxyliques aliphatiques, les molybdates, les nitrates, les nitrites, les phosphonates et les phosphates, de préférence où la composition comprend un ou plusieurs des éléments suivants :
• un monocarboxylate aliphatique, de préférence un monocarboxylate aliphatique choisi dans le groupe constitué par les monocarboxylates aliphatiques en C₄-C₁₂ ;
• un dicarboxylate aliphatique, de préférence un dicarboxylate aliphatique choisi dans le groupe constitué par les dicarboxylates aliphatiques en C₆-C₁₆; ou
• un tricarboxylate aliphatique, de préférence un tricarboxylate aliphatique choisi dans le groupe constitué par les tricarboxylates aliphatiques en C₇-C₁₈.

4. Composition selon l'une quelconque des revendications 1 à 3, où le carboxamide aliphatique comprend de 2 à 16 atomes de carbone, de préférence le carboxamide aliphatique comprend de 2 à 10 atomes de carbone, plus préférablement le carboxamide aliphatique comprend de 4 à 6 atomes de carbone ; le carboxamide aliphatique comprend un ou deux groupes carboxamides ; les groupes carboxamides sont des groupes carboxamides primaires ou secondaires ; et le carboxamide aliphatique ne comprend aucun hétéroatome hormis les hétéroatomes compris dans les groupes carboxamides.

5. Composition selon l'une quelconque des revendications 1 à 3, où le carboxamide aliphatique est un composé de formule (I) 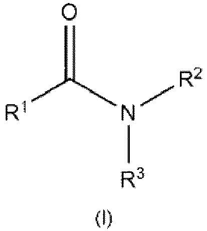
où R¹, R² et R³ représentent indépendamment H, un alkyle linéaire, ramifié ou cyclique non substitué en C₁-C₁₀, un alcényle linéaire, ramifié ou cyclique non substitué en C₂-C₁₀ ou un alcynyle linéaire ou ramifié non substitué en C₂-C₁₀ ;
de préférence, R¹, R² et R³ représentent individuellement un alkyle linéaire, ramifié ou cyclique en C₁-C₁₀, un alcényle linéaire, ramifié ou cyclique en C₂-C₁₀ ou un alcynyle linéaire ou ramifié en C₂-C₁₀ et l'un ou les deux de R² et R³ représentent H ou du méthyle;
plus préférablement, R¹ représente un alkyle linéaire, ramifié ou cyclique en C₁-C₁₀, et l'un ou les deux de R² et R³ représentent H ou du méthyle;
préférentiellement, R¹ représente un alkyle linéaire, ramifié ou cyclique en C₁-C₁₀, et les deux R² et R³ représentent H ;
ou où le carboxamide aliphatique est un composé de formule (II) 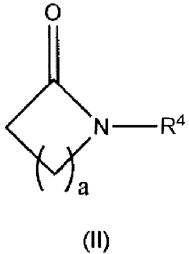
où a est un nombre entier choisi parmi 1 et 8 et R⁴ représente H, un alkyle linéaire, ramifié ou cyclique non substitué en C₁-C₁₀, un alcényle linéaire, ramifié ou cyclique non substitué en C₂-C₁₀, ou un alcynyle linéaire ou ramifié non substitué en C₂-C₁₀ ;
de préférence, a est un nombre entier choisi parmi 1 et 5 et R⁴ représente H ou du méthyle ;
préférentiellement, a est un nombre entier choisi parmi 1 et 5 et R⁴ représente H ;
ou où le carboxamide aliphatique est un composé de formule (III) 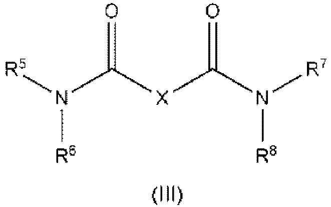
où X représente un alcanediyle linéaire, ramifié ou cyclique non substitué en C₁-C₁₀, un alcènediyle linéaire, ramifié ou cyclique non substitué en C₂-C₁₀, ou un alkynediyle linéaire ou ramifié non substitué en C₂-C₁₀, et R⁵, R⁶, R⁷ et R⁸ représentent indépendamment H ou du méthyle;
de préférence, X représente un alcanediyle linéaire, ramifié ou cyclique non substitué en C₁-C₁₀, et R⁵, R⁶, R⁷ et R⁸ représentent indépendamment H ou du méthyle ;
plus préférablement, X représente un alcanediyle linéaire, ramifié ou cyclique non substitué en C₁ à C₁₀, et R⁵, R⁶, R⁷ et R⁸ représentent H.
où le carboxamide aliphatique n'est pas de l'adipamide et/ou de la N-méthyl-2-pyrrolidone.

6. Composition selon la revendication 5, où le carboxamide aliphatique est l'un des composés suivants : (I)a-(I)j, (II)a-(Ild) ou (III)a-(III)j :
| | Composé |
|---|---|
| 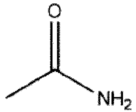 | (I)a |
| 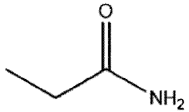 | (I)b |
| 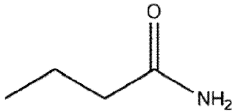 | (I)c |
| 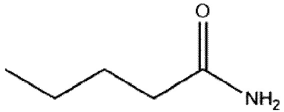 | (I)d |
| 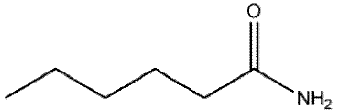 | (I)e |
| 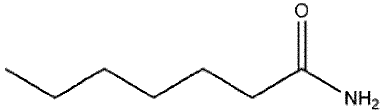 | (I)f |
| 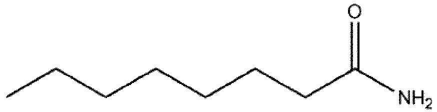 | (I)g |
| 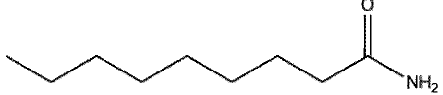 | (I)h |
| 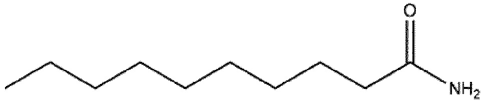 | (I)i |
| 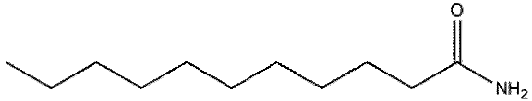 | (I)i |
| | Composé |
|---|---|
| 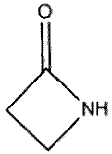 | (II)a |
| 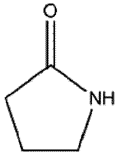 | (II)b |
| 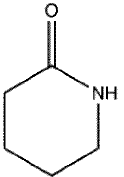 | (II)c |
| 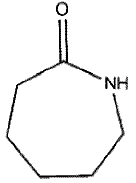 | (II)d |
| | Composé |
|---|---|
| 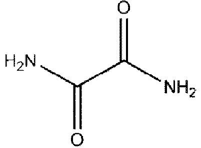 | (III)a |
| 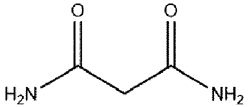 | (III)b |
| 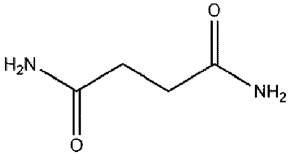 | (III)c |
| 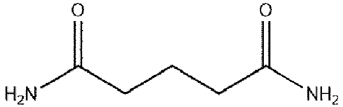 | (III)d |
| 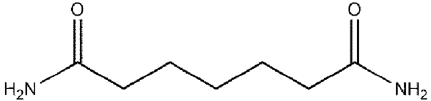 | (III)f |
| 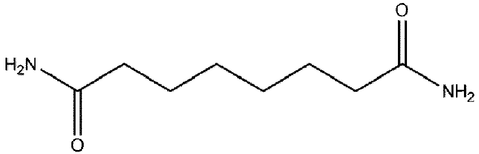 | (III)g |
| 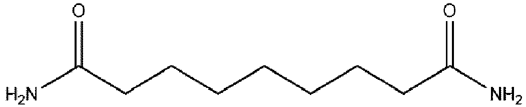 | (III)h |
| 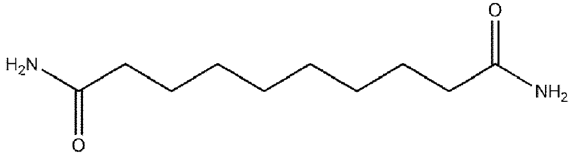 | (III)i |
| 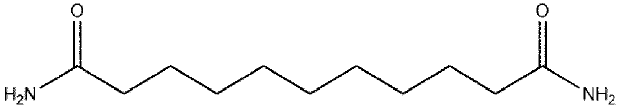 | (III)j |

7. Composition selon la revendication 6, où le carboxamide aliphatique est un composé choisi dans le groupe constitué par (I)b-(I)j, de préférence (I)b-(I)g, plus préférablement (I)b-(I)d.

8. Composition selon la revendication 6, où le carboxamide aliphatique est un composé choisi dans le groupe constitué par (II)a, (II)c et (II)e, de préférence (II)c et (II)e, plus préférablement (II)c.

9. Composition selon la revendication 6, où le carboxamide aliphatique est un composé choisi dans le groupe constitué par (III)d-(III)j, de préférence (III)f-(III)h, plus préférablement (III)f-(III)g, où le carboxamide aliphatique n'est pas de l'adipamide.

10. Composition selon l'une quelconque des revendications 1 à 9, où le carboxamide aliphatique n'est pas du diamide d'acide oxalique, de l'amide d'acide succinique, de l'acétamide, de la 2-pyrrolidone ou du caprolactame, de préférence, le carboxamide aliphatique n'est pas du diamide d'acide oxalique, de l'amide d'acide succinique, de l'acétamide, de la 2-pyrrolidone ou du caprolactame.

11. Composition selon l'une quelconque des revendications 1 à 10 qui est fournie sous la forme d'une composition prête à l'emploi qui est un fluide caloporteur où :
• la concentration de l'au moins un carboxamide aliphatique est comprise entre 0,001 et 10 % en poids (par rapport au poids total de la composition), de préférence comprise entre 0,01 et 5 % en poids, plus préférablement comprise entre 0,1 et 5 % en poids ; et
• la composition comprend plus de 90 % en poids (par rapport au poids total de la composition), de préférence plus de 95 % en poids, de préférence plus de 98 % en poids, et de préférence plus de 99 % en poids de fluide de base.

12. Composition selon la revendication 11, où la concentration du carboxamide aliphatique est inférieure à 0,6 % en poids ou inférieure à 0,5 % en poids.

13. Composition selon la revendication 11, où
• le fluide de base est constitué d'eau et d'un alcool choisi dans le groupe constitué par le monoéthylène glycol, le monopropylène glycol, le 1,3-propanediol, le glycérol ou les mélanges de ceux-ci où l'alcool est présent en une quantité comprise entre 30 et 70 % en poids (par rapport au poids du fluide de base) ;
• le carboxamide aliphatique est un composé choisi dans le groupe constitué par (I)b, (I)c, (I)d, (I)e, (I)f, (I)g, (I)h, (I)i, (I)j, (II)a, (II)c, (III)b, (III)d, (III)f, (III)g, (III)h, (III)i et (III)j ;
• la composition a un pH compris entre 3 et 8 ;
• la composition comprend un monocarboxylate aliphatique en C₄-C₁₂, un dicarboxylate aliphatique en C₆-C₁₆ ou un tricarboxylate aliphatique en C₇-C₁₈.

14. Composition selon l'une quelconque des revendications 1 à 10, qui est fournie sous la forme d'un concentré comprenant un fluide de base qui est constitué d'eau et d'un alcool choisi dans le groupe constitué par le monoéthylène glycol, le diéthylène glycol, le triéthylène glycol, le tétraéthylène glycol, le pentaéthylène glycol, l'hexaéthylène glycol, le monopropylène glycol, le 1,3-propanediol, le dipropylène glycol, le tripropylène glycol, le tétrapropylène glycol, le pentapropylène glycol, l'hexapropylène glycol, le méthanol, l'éthanol, le propanol, le butanol, le tétrahydrofurfuryle, le furfuryle éthoxylé, l'éther diméthylique de glycérol, le sorbitol, le 1,2,6-hexanetriol, le triméthylolpropane, le méthoxyéthanol et le glycérol, de préférence choisis dans le groupe constitué par le monoéthylène glycol, le monopropylène glycol, le 1,3-propanediol, le glycérol ou les mélanges de ceux-ci, où l'alcool est présent en une quantité comprise entre 10 et 99 % en poids (par rapport au poids du fluide de base), de préférence de 30 à 70 % en poids, adapté à la préparation de la composition prête à l'emploi selon l'une quelconque des revendications 11 à 13 uniquement par addition d'eau et/ou d'alcool ; de préférence, uniquement par addition d'eau, de monoéthylène glycol, de monopropylène glycol, de 1,3-propanediol et/ou de glycérol ; préférentiellement, uniquement par addition d'eau.

15. Utilisation de la composition selon l'une quelconque des revendications 1 à 14, de préférence de la composition prête à l'emploi selon l'une quelconque des revendications 11 à 13 comme un fluide caloporteur ou liquide de refroidissement.
